# FASCICULE DE BREVET EUROPEEN

(11) **EP 1 104 529 B1**
(45) Date de publication et mention de la délivrance du brevet: **23.01.2002**
(21) Numéro de dépôt: 99936708.9
(22) Date de dépôt: 06.08.1999
(51) Int. Cl.: F16L 25/00, F16L 33/26

(54) **DISPOSITIF DE SERTISSAGE OU DE COUPLAGE D'ELEMENTS D'EXTREMITE D'UNE CONDUITE FLEXIBLE**
BOERDEL- ODER KUPPLUNGSVORRICHTUNG ZUM VERBINDEN VON SCHLAUCHELEMENTEN
DEVICE FOR CRIMPING OR COUPLING END ELEMENTS OF A FLEXIBLE FLOWLINE

(30) Priorité: 12.08.1998 FR 9810334
(43) Date de publication de la demande: 06.06.2001
(73) Titulaire: COFLEXIP, 75116 Paris (FR)
(72) Inventeur: BERTON, Hugues, F-76940 La Mailleraye-sur-Seine (FR); RIGAUD, Jean, F-76000 Rouen (FR); BUON, Eric, F-76130 Mont-Saint-Aignan (FR)
(74) Mandataire: Bertrand, Didier
(86) Numéro de dépôt international: FR9901954
(87) Numéro de publication internationale: WO0009933

(56) Documents cités:
- GB-A- 586 488
- GB-A- 804 583
- GB-A- 885 972
- US-A- 3 459 233

## Description

La présente invention concerne un dispositif de sertissage ou de couplage d'éléments d'extrémité d'une conduite flexible, ainsi qu'un procédé de mise en oeuvre de ce dispositif en extrémité d'une conduite flexible.

Une conduite flexible dite "rough bore" comprend en général comme éléments les plus internes, au moins une carcasse métallique interne réalisée par un enroulement spiralé d'un fil de forme tel qu'un feuillard profilé et agrafé et une gaine d'étanchéité disposée au-dessus de la carcasse métallique.

On s'attachera à considérer dans le cadre de la présente invention une conduite flexible dont la carcasse métallique comporte des déjoints entre les spires, la gaine d'étanchéité comprenant au droit de chaque déjoint une partie fluée qui remplit au moins en partie le déjoint correspondant.

Ces conduites nécessitent souvent d'être couplées en extrémité avec d'autres conduites de même diamètre ou de diamètre différent ou encore avec une autre structure fixe, les couplages ou liaisons étant assurés par un embout terminal associé à l'extrémité de la conduite à coupler.

La conduite flexible doit être fixée à chaque embout terminal de manière à permettre à la fois la continuité de l'étanchéité de la conduite flexible et la reprise des efforts de traction dus à l'effet de fond, lesquels efforts sont totalement repris par les nappes d'armure de traction ainsi que cela est connu.

L'étanchéité entre l'embout terminal et la gaine d'étanchéité est assurée au moyen d'une douille métallique présentant une surface extérieure sensiblement conique, enfilée et sertie sur la gaine d'étanchéité. La douille métallique retient en outre axialement la gaine d'étanchéité dans l'embout terminal de connexion, en l'opposant aux contraintes résiduelles axiales dues au procédé spécifique de fabrication de la conduite flexible. La gaine d'étanchéité est pincée entre la douille métallique et la carcasse métallique, celle-ci présentant une résistance mécanique suffisante pour résister au sertissage de la douille métallique.

Les divers éléments de liaison entre l'embout terminal et l'extrémité de la conduite flexible à relier sont décrits et représentés dans FR-2 743 614 qui est incorporé dans la présente demande pour ce qui concerne les parties communes nécessaires à la compréhension de la liaison d'une extrémité de conduite flexible à un embout terminal.

Dans ce document, il est également préconisé d'insérer un insert tubulaire appelé canule, entre deux couches constituées par une sous-couche sacrificielle en contact avec la carcasse métallique interne et une barrière d'étanchéité, la sous-couche sacrificielle étant destinée à empêcher la barrière d'étanchéité de fluer dans les déjoints des spires de la carcasse métallique. La canule telle que décrite dans ce document présente une partie médiane cylindrique tubulaire et une extrémité arrière effilée en biseau, délimitée à l'extérieur par une surface conique d'angle au sommet compris entre 3 et 30°. La canule présente un épaulement à l'extrémité avant, ledit épaulement définissant une butée pour la barrière d'étanchéité. Par ailleurs, la canule est en butée axiale contre une bague de retenue solidaire de l'extrémité avant de la carcasse métallique interne, ladite bague de retenue étant, à son tour, solidaire de l'embout terminal.

Quel que soit le mode de réalisation décrit dans FR 2 743 614, le sertissage de la barrière d'étanchéité n'est pas effectué directement sur la carcasse métallique interne mais par une couche sacrificielle disposée autour de ladite carcasse métallique. De ce fait, le sertissage est effectué plastique sur plastique, même dans le cas de la canule puisque cette dernière est insérée entre la barrière d'étanchéité et la couche sacrificielle.

Dans WO 97/01058 il est proposé un système d'étanchéité constitué par un manchon qui est inséré entre la carcasse métallique interne et les couches de barrière disposées adjacentes à ladite carcasse métallique. Le manchon est cylindrique sur la quasi totalité de sa longueur et comprend une dentelure sur la face externe qui est adjacente à la couche de barrière inférieure, de manière à maintenir fixement ladite couche inférieure et l'empêcher de glisser. Dans un autre mode de réalisation, le manchon comprend une extrémité dentelée à la manière d'une scie qui coupe la couche barrière inférieure après insertion et rotation. Une bague ou douille métallique sertit les couches de barrière sur le manchon cylindrique. Le manchon cylindrique comprend également une bouterolle (Snap connector en anglais) à une de ses extrémités pour solidariser le manchon au corps de l'embout terminal.

Ces dispositifs ou systèmes d'étanchéité sont mal adaptés aux conduites flexibles comprenant une gaine ou barrière d'étanchéité qui a flué dans les déjoints des spires de la carcasse métallique interne. En effet, l'introduction à force des canules ou manchons cylindriques de l'art antérieur détériorent plus ou moins la gaine ou barrière d'étanchéité au niveau des tétons ou zones fluées. Or, la destruction, même partielle, de ces zones fluées peut entraîner un défaut d'étanchéité entre la conduite flexible et l'embout terminal par exemple par suite de la création de fissures dans la gaine d'étanchéité. De plus l'introduction à force de la canule ou du manchon entre la gaine d'étanchéité et la carcasse métallique provoque la formation de bossages sur la surface extérieure de ladite gaine, au droit des tétons de fluage ou zones fluées. La formation de ces bossages, si les tétons de fluage ne sont pas coupés est un inconvénient car soit la douille de serrage enfilée sur la gaine interne ne joue pas entièrement son rôle car elle doit présenter un diamètre intérieur au moins égal au diamètre extérieur de la gaine au niveau desdits bossages pour être enfilée facilement autour de la gaine, soit le diamètre intérieur est plus faible que le diamètre extérieur au niveau des bossages et alors l'enfilage est mal aisé à moins de couper les tétons de fluage pour obtenir une surface externe de gaine sensiblement cylindrique au niveau de la canule.

D'autres systèmes sont décrits dans US 4 950 001, CA 734 830, US 4 773 452, US 2 394 632. De tels systèmes présentent un certain nombre d'inconvénients et, en particulier, ils imposent un montage fastidieux d'éléments de raccord en plusieurs parties, qui ne s'adaptent pas naturellement à l'extrémité du tube. Ces solutions impliquent non seulement une insertion d'un dispositif de couplage au sein des couches constitutives de la conduite flexible mais également le vissage d'un écrou avec parfois l'adjonction d'éléments de renforcement de la liaison conduite / dispositif de couplage, tels une poudre ou une résine durcissante. Dans certains cas, l'adaptation du dispositif de couplage sur l'extrémité de la conduite est même irréversible ou bien détériore les couches constitutives en extrémité de la conduite.

Le brevet GB 586 488 décrit un dispositif comprend un col qui est inséré entre la carcasse métallique et la gaine d'étanchéité. Toutefois, la gaine d'étanchéité repose sur une surface lisse du col ce qui conduit à la création de bossages aux endroits des zones de fluage.

La présente invention a pour but de remédier aux inconvénients précités et de proposer un dispositif simple de sertissage ou de couplage qui s'adapte facilement à l'extrémité d'une conduite flexible tout en préservant l'intégrité de la gaine d'étanchéité interne.

La présente invention a pour objet un dispositif de sertissage ou de couplage d'éléments d'extrémité d'une conduite flexible, qui comprend une canule cylindro-tronconique et effilée à une extrémité, une partie de ladite canule étant insérée par l'extrémité effilée entre la gaine d'étanchéité et la carcasse métallique, et qui est caractérisé en ce que la canule présente au moins sur une portion de la partie insérée des rainures qui sont sensiblement en correspondance de forme avec les parties fluées de la gaine d'étanchéité, de sorte qu'après introduction de la canule au moins certaines desdites parties fluées se logent presque entièrement dans des rainures de la canule.

De ce fait, la gaine d'étanchéité n'est pas endommagée au niveau des tétons ou zones de fluage dans les déjoints des spires de la carcasse et la surface externe de la gaine au niveau de la canule est quasi cylindrique ce qui permet un meilleur enfilage de la douille de serrage sur ladite gaine interne.

Selon une autre caractéristique, le profil des rainures de la canule est de forme trapézoïdale et ouvert sur la face de réception des parties fluées de la gaine d'étanchéité. Cette ouverture de la rainure facilite davantage l'introduction des parties fluées de la canule dans lesdites rainures au fur et à mesure de la pénétration entre la gaine d'étanchéité interne et la carcasse métallique.

Selon une autre caractéristique, les bords libres des rainures de la canule sont arrondis. Lors de l'introduction de la canule entre la gaine et la carcasse, les parties fluées de la gaine sont alors avantageusement préservées de toute détérioration par sectionnement ou arrachement par des rainures qui présenteraient au contraire des bords libres angulaires. Le risque de détérioration des parties fluées de la gaine par les bords libres des rainures est également moindre après introduction complète de la canule.

Selon une autre caractéristique, la profondeur des rainures de la canule est au moins égale à la hauteur de la partie fluée de la gaine d'étanchéité. Les rainures ont ainsi suffisamment de profondeur pour que la partie fluée de la gaine puisse s'y s'introduire facilement sur toute sa hauteur sans être éventuellement comprimée.

Selon une autre caractéristique, l'angle d'ouverture du profil des rainures de la canule est d'environ 90°. Cet angle d'ouverture est suffisamment large pour une introduction aisée des parties fluées de la gaine dans les rainures de la canule.

Selon une autre caractéristique, l'angle au sommet de l'extrémité effilée de la canule est compris entre 5 et 30°. Un angle au sommet réduit facilite également l'introduction de la canule au sein de la conduite flexible offrant une certaine progressivité d'insertion.

Un autre objet de la présente invention est un procédé d'introduction du dispositif en extrémité d'une conduite flexible, ledit procédé étant caractérisé en qu'il consiste à chauffer la gaine d'étanchéité de manière à ramollir au moins les parties fluées sur toute la longueur d'enfilement de la canule et à introduire la canule pendant que ladite gaine est ramollie.

Selon une autre caractéristique, le système de chauffage de la gaine est constitué d'une enceinte confinant un certain volume entourant une partie de la gaine au moins au niveau de la zone d'introduction, de l'air chaud étant introduit dans ledit volume pour chauffer ladite partie de la gaine. Ce dispositif simple est aisé à mettre en place et permet un chauffage de la gaine de manière homogène au niveau de la zone d'introduction.

L'invention sera mieux comprise à l'aide de la description qui suit, en référence aux dessins schématiques annexés représentant à titre d'exemple une forme de réalisation du dispositif de sertissage ou de couplage d'éléments d'extrémité d'une conduite flexible. D'autres avantages et caractéristiques seront mis en évidence à la lecture de la description.

La figure 1 est une vue partielle du dispositif de sertissage ou de couplage en cours de montage sur une conduite flexible à carcasse métallique interne.

La figure 2 est une vue partielle en coupe du dispositif de sertissage ou de couplage selon l'invention.

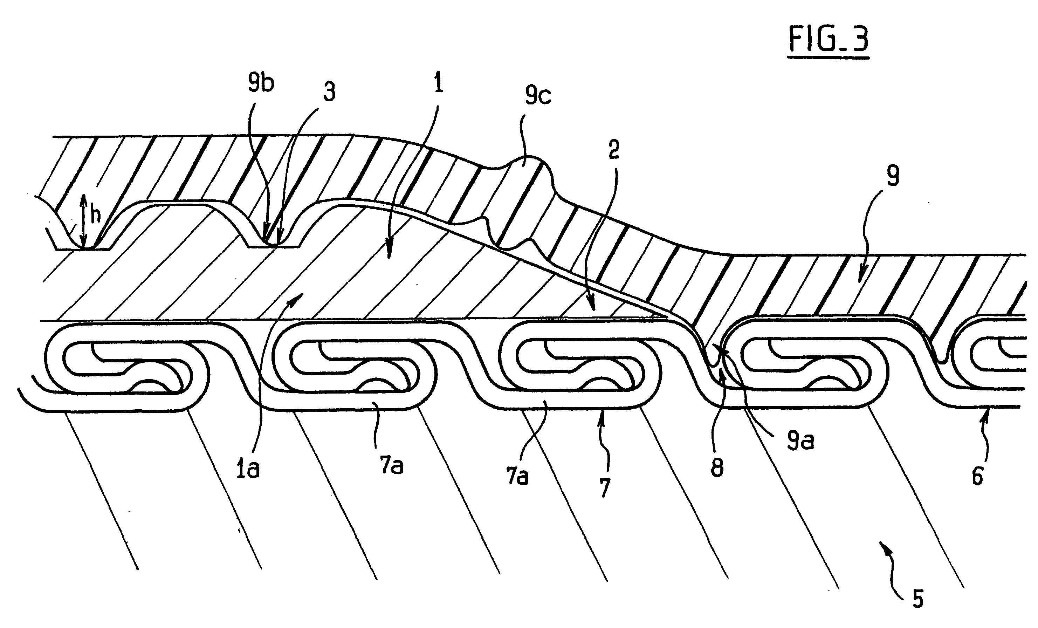

La figure 3 est une vue partielle du dispositif de sertissage ou de couplage de la figure 2 introduit entre la carcasse métallique et la gaine d'étanchéité de la conduite flexible.

La figure 4 est une vue d'une forme possible d'un profil de rainure.

De façon générale et avant la mise en place d'un embout terminal, la conduite flexible est sectionnée à l'extrémité qui doit être insérée dans l'embout. Dans une autre étape, on réalise diverses phases au cours desquelles il est nécessaire, d'une part, de maintenir fixes les diverses couches constitutives de la conduite flexible afin de les empêcher de se déplacer et/ou de se déformer, et, d'autre part, de sertir certaines desdites couches afin d'assurer l'étanchéité en bout de conduite. L'ensemble des opérations et moyens à mettre en oeuvre lors de la liaison entre l'extrémité de la conduite flexible et l'embout terminal, est décrit dans FR 2 743 416, qui est intégré dans la présente demande pour ce qui concerne lesdites opérations et moyens de fixation. De même, la canule selon la présente invention, et qui sera décrite ci-après, est également en butée sur une bague de retenue ou bague de propreté, comme cela est décrit dans le document mentionné ci-dessus.

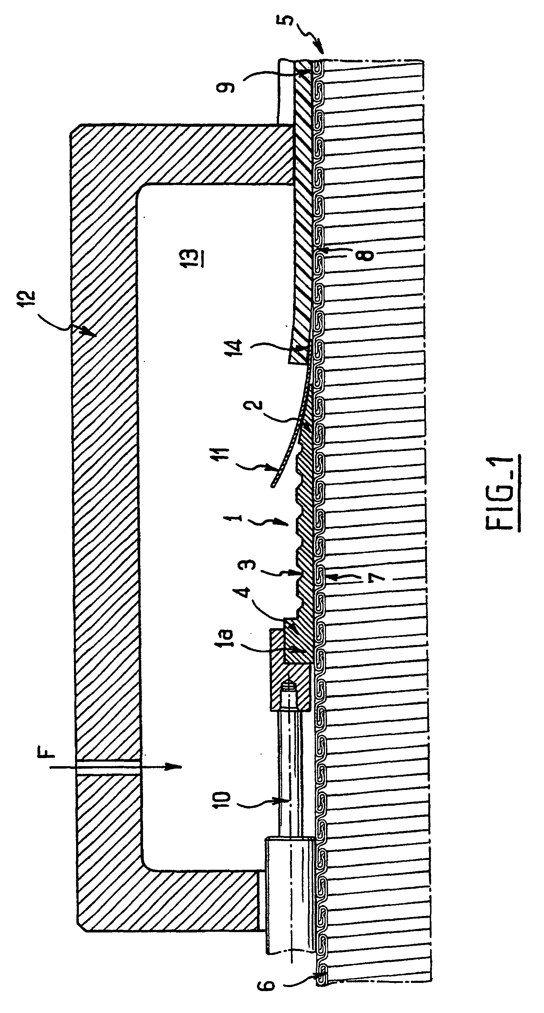

Le dispositif de sertissage ou de couplage 1 selon l'invention est représenté en cours de montage sur la conduite flexible 5 sur la figure 1. La conduite 5 comporte, en tant qu'éléments les plus internes, une carcasse métallique interne 6 formée par l'enroulement hélicoïdal d'un fil de forme agrafable ou d'un feuillard profilé et agrafé 7 et comportant des déjoints 8 entre les spires consécutives 7a, et une gaine d'étanchéité 9 disposée au-dessus de la carcasse métallique 6 et comprenant au droit de chaque déjoint 8 une partie fluée 9a qui remplit au moins en partie le déjoint 8 correspondant.

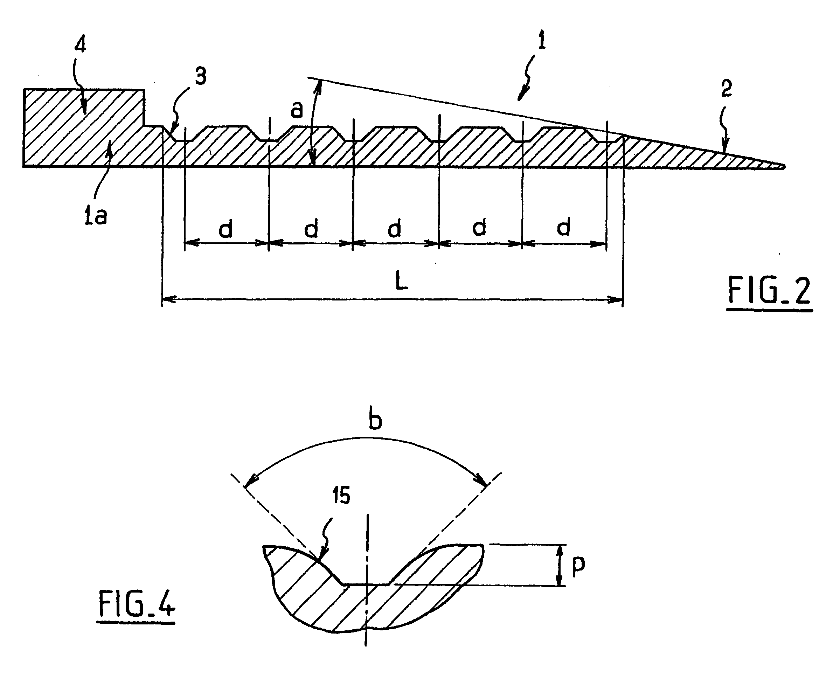

Le dispositif de sertissage ou de couplage (figure 2) est constitué par une canule cylindro-tronconique la, effilée à son extrémité 2, et comportant des rainures 3 en enroulement hélicoïdal ainsi qu'une bride de jonction 4. Le pas de l'enroulement des rainures 3 est constant d'une longueur d, ce pas correspondant au pas d'enroulement du feuillard spiralé 7 constituant la carcasse métallique. Le pas des rainures 3 est déterminé en mesurant le pas d'enroulement de la carcasse métallique 6 à l'extrémité de la conduite flexible, le pas des rainures incluant les tolérances de fabrication au pas moyen de la carcasse.

Le dispositif de sertissage ou de couplage 1 est introduit à l'aide de vérins 10 entre la carcasse métallique 6 et la gaine d'étanchéité 9 éventuellement à l'aide d'une chausse-canule 11 pour améliorer l'introduction de la canule, la chausse-canule 11 étant enlevée après introduction de la partie tronconique de l'extrémité 2 de la canule.

Les rainures 3 sont sensiblement en correspondance de forme avec les parties fluées 9a de la gaine d'étanchéité 9, de sorte qu'après introduction de la canule 1a au moins certaines desdites parties fluées 9b se logent presque entièrement dans les rainures 3 de la canule 1a. Ainsi, la canule 1a bloquée dans son mouvement par les parties fluées 9b est maintenue efficacement en liaison avec l'extrémité de la conduite flexible 5.

On peut utiliser un dispositif de chauffage 12 de la gaine, formé par une enceinte confinant un certain volume 13 entourant une partie de la gaine au moins au niveau de la zone d'introduction 14 de la canule 1a, de l'air chaud indiqué par une flèche F étant introduit dans le volume 13. Ce chauffage ramollit au moins les parties fluées 9a, 9b de la gaine qui peuvent être repoussées durant le passage de la canule 1a, facilitant son insertion tout en préservant mieux lesdites parties fluées d'un risque de détérioration par sectionnement ou arrachement par ladite canule 1a. De préférence, la gaine est ramollie dans toute son épaisseur pour faciliter le dudgeonnage de ladite gaine.

La figure 4 représente le profil d'une rainure 3 de la canule selon une forme préférée de réalisation. Le profil de la rainure 3 est de forme trapézoïdale et ouvert sur la face de réception des parties fluées 9a, 9b de la gaine d'étanchéité 9. Les bords libres 15 des rainures 3 de la canule 1a sont arrondis, les parties fluées 9a, 9b de la gaine 9 sont alors encore mieux préservées de toute détérioration par sectionnement ou arrachage par des rainures qui présenteraient au contraire des bords libres angulaires, l'introduction des parties fluées 9a, 9b dans des rainures 3 de la canule 1 étant également plus aisée.

De préférence, la profondeur p des rainures 3 de la canule 1a est au moins égale à la hauteur h de la partie fluée 9a, 9b de la gaine d'étanchéité 9. Les rainures 3 ont ainsi suffisamment de profondeur pour que la partie fluée 9a, 9b de la gaine 9 puisse s'y loger facilement sur toute sa hauteur sans être éventuellement comprimée. De plus, la formation de bossages 9c est empêchée dans la partie rainurée de la canule, lesdits bossages apparaissant seulement au niveau de la partie tronconique 2 ce qui n'a pas d'incidence sur l'enfilement de la douille de serrage qui est en appui sur la partie cylindrique de la canule.

L'angle b d'ouverture du profil des rainures 3 de la canule 1a dépend de la forme des parties fluées et il est compris entre 60 et 120° et il est de préférence d'environ 90°. Cet angle d'ouverture permet une introduction aisée des parties fluées 9b de la gaine 9 dans les rainures 3 de la canule 1a tout en garantissant un maintien efficace des parties fluées dans lesdites rainures 3, la canule 1a étant en place au sein de la conduite 5.

L'angle au sommet a de l'extrémité effilée 2 de la canule 1a est compris entre 5 et 30°. Un angle au sommet assez aigu facilite également l'introduction de la canule 1a au sein de la conduite flexible 5 offrant une certaine progressivité d'insertion.

Le dispositif de sertissage ou de couplage selon l'invention peut également être utilisé pour des conduites comportant une gaine par-dessus une voûte de pression entre lesquelles est introduite la canule 1a, la voûte de pression comportant des spires et des déjoints entre lesdites spires, la gaine comprenant au droit de chaque déjoint une partie fluée remplissant au moins en partie le déjoint correspondant.

## Revendications

1. Dispositif de sertissage ou de couplage d'éléments d'extrémité d'une conduite flexible (5), lesdits éléments d'extrémité étant constitués par au moins une carcasse métallique (6) réalisée par un enroulement spiralé d'un fil de forme ou d'un feuillard agrafé (7) et comportant des déjoints (8) entre les spires, et une gaine d'étanchéité (9) disposée au-dessus de la carcasse métallique (6) et comprenant au droit de chaque déjoint (8) une partie fluée (9a, 9b) qui remplit au moins en partie le déjoint (8) correspondant, le dispositif comprenant une canule (1a) cylindro-tronconique et effilée à une extrémité (2), une partie de ladite canule (1a) étant insérée par l'extrémité effilée (2) entre la gaine d'étanchéité (9) et la carcasse métallique (6), **caractérisé en ce que** la canule (1a) présente au moins sur une portion de la surface extérieure de la partie insérée des rainures (3) qui sont sensiblement en correspondance de forme avec les parties fluées de la gaine d'étanchéité (9), de sorte qu'après introduction de la canule (1a) au moins certaines desdites parties fluées (9a, 9b) se logent presque entièrement dans les rainures (3) de la canule (1a).

2. Dispositif de sertissage ou de couplage d'éléments d'extrémité d'une conduite flexible (5) selon la revendication 1, **caractérisé en ce que** le profil des rainures (3) de la canule (1a) est de forme trapézoïdale et ouvert sur la face de réception des parties fluées (9a, 9b) de la gaine d'étanchéité (9).

3. Dispositif de sertissage ou de couplage d'éléments d'extrémité d'une conduite flexible (5) selon les revendications 1 ou 2, **caractérisé en ce que** les bords libres des rainures (3) de la canule (1a) sont arrondis.

4. Dispositif de sertissage ou de couplage d'éléments d'extrémité d'une conduite flexible (5) selon l'une des revendications précédentes, **caractérisé en ce que** la profondeur (p) des rainures (3) de la canule (1a) est au moins égale à la hauteur (h) de la partie fluée (9a, 9b) de la gaine d'étanchéité (9).

5. Dispositif de sertissage ou de couplage d'éléments d'extrémité d'une conduite flexible (5) selon l'une des revendications précédentes, **caractérisé en ce que** l'angle d'ouverture (b) du profil des rainures (3) de la canule (1a) est compris entre 60 et 120° et, de préférence, d'environ 90°.

6. Dispositif de sertissage ou de couplage d'éléments d'extrémité d'une conduite flexible (5) selon l'une des revendications précédentes, **caractérisé en ce que** l'angle au sommet (a) de l'extrémité effilée (2) de la canule (1a) est compris entre 5 et 30°.

7. Procédé de montage d'un dispositif de sertissage ou de couplage d'éléments d'extrémité d'une conduite flexible (5) selon la revendication 1, **caractérisé en ce qu'**il consiste à chauffer la gaine d'étanchéité (9) de manière à ramollir au moins les parties fluées (9a, 9b) et à introduire la canule (1a) après chauffage de la gaine (9).

8. Procédé de montage d'un dispositif de sertissage ou de couplage d'éléments d'extrémité d'une conduite flexible (5) selon la revendication 7, **caractérisé en ce que** le dispositif de chauffage (12) de la gaine (9) est constitué d'une enceinte confinant un certain volume (13) entourant une partie de la gaine (9) au moins au niveau de la zone d'introduction (14), de l'air chaud étant introduit dans ledit volume (13) pour chauffer ladite partie de la gaine (9).

## Patentansprüche

1. Vorrichtung zur Bördelung oder Kupplung von Endstücken von flexiblen Schläuchen oder Leitungen (5), wobei besagte Endstücke sich aus mindestens einem Metallgerippe (6) zusammensetzen, das durch eine Spiralwicklung eines Formdrahtes oder eines gefalzten Bandes (7) gebildet wird und Fugen (8) zwischen den Spulenwindungen sowie einen Dichtungsmantel (9) aufweisen, der über dem Metallgerüst (6) angebracht ist, und bei jeder Fuge ein verformbares Teil (9a, 9b) aufweist, das mindestens teilweise die entsprechende Fuge (8) ausfüllt, wobei die Vorrichtung eine Kanüle (1a) enthält, die zylindrisch, kegelstumpfartig und an einem Ende (2) zugespitzt ist, wobei ein Teil der besagten Kanüle (1a) mit dem zugespitzten Endstück (2) zwischen den Dichtungsmantel (9) und das Metallgerippe (6) eingefügt wird, **gekennzeichnet dadurch, dass** die Kanüle (1a) über wenigstens ein Teilstück der äußeren Oberfläche des eingesetzten Teilstücks der Rillen (3) hinausragt, die sinnvoller Weise so geformt sind, dass sie der Form der verformbaren Teile des Dichtungsmantels (9) entsprechen, so dass nach der Einführung der Kanüle (1a) wenigstens einige der besagten verformbaren Teile (9a, 9b) sich fast vollständig in die Rillen (3) der Kanüle (1a) einpassen.

2. Vorrichtung zur Bördelung oder Kupplung von Endstücken von flexiblen Schläuchen oder Leitungen (5) gemäß Anspruch 1, **dadurch gekennzeichnet, dass** das Profil der Rillen (3) der Kanüle (1a) von trapezähnlicher Form ist und auf der Seite offen ist, wo es die verformbaren Teile (9a, 9b) des Dichtungsmantels (9) aufnimmt.

3. Vorrichtung zur Bördelung oder Kupplung von Endstücken von flexiblen Schläuchen oder Leitungen (5) gemäß Anspruch 1 und 2, **dadurch gekennzeichnet, dass** die freien Enden der Rillen (3) der Kanüle (1a) abgerundet sind.

4. Vorrichtung zur Bördelung oder Kupplung von Endstücken von flexiblen Schläuchen oder Leitungen (5) gemäß einem der vorangehenden Ansprüche, **dadurch gekennzeichnet, dass** die Tiefe (p) der Rillen (3) der Kanüle (1a) mindestens gleich der Höhe (h) des verformbaren Teils (9a, 9b) des Dichtungsmantels (9) ist.

5. Vorrichtung zur Bördelung oder Kupplung von Endstücken von flexiblen Schläuchen oder Leitungen (5) gemäß einem der vorangehenden Ansprüche, **dadurch gekennzeichnet, dass** der Öffnungswinkel (b) des Profils der Rillen (3) der Kanüle (1a) zwischen 60 und 120° und vorzugsweise bei ungefähr 90° liegt.

6. Vorrichtung zur Bördelung oder Kupplung von Endstücken von flexiblen Schläuchen oder Leitungen (5) gemäß einem der vorangehenden Ansprüche, **dadurch gekennzeichnet, dass** der Winkel am Scheitelpunkt (a) des zugespitzten Endstücks (2) der Kanüle (1a) zwischen 35° liegt.

7. Montagevorgang einer Vorrichtung zur Bördelung oder Kupplung von Endstücken von flexiblen Schläuchen oder Leitungen (5) gemäß Anspruch 1, **dadurch gekennzeichnet, dass** der Dichtungsmantel (9) dergestalt erhitzt wird, dass wenigstens die verformbaren Teile (9a, 9b) weich werden und die Kanüle (1a) nach dem Erhitzen des Mantels (9) eingeführt wird.

8. Montagevorgang einer Vorrichtung zur Bördelung oder Kupplung von Endstücken von flexiblen Schläuchen oder Leitungen (5) gemäß Anspruch 7, **dadurch gekennzeichnet, dass** die Erhitzungsvorrichtung (12) des Mantels (9) durch eine Hülle gebildet wird, die ein gewisses Volumen (13) umfasst und einen Teil des Mantels (9) umschließt, mindestens auf dem Niveau der Einführungszone (14) der Heißluft, die in das besagte Volumen (13) eingeleitet wird, um den besagten Teil des Mantels (9) zu erhitzen.

## Claims

1. Device for crimping or coupling end elements of a flexible pipe (5), said end elements consisting of at least one metal carcass (6) made by spiralwinding a shaped filament or an interlocked strip (7) and having discontinuities (8) between the turns, and a sealing sheath (9) arranged over the metal carcass (6) and comprising, in the region of each discontinuity (8), a crept part (9a, 9b) which at least partially fills the corresponding discontinuity (8), the device comprising a cylindro-frustoconical hollow nipple (1a) tapered at one end (2), part of said hollow nipple (1a) being inserted through the tapered end (2) between the sealing sheath (9) and the metal carcass (6), **characterized in that** the hollow nipple (1a) has, over at least a portion of the external surface of the inserted part, grooves (3) which roughly correspond, in terms of shape, with the crept parts of the sealing sheath (9), so that once the hollow nipple (1a) has been introduced, at least some of said crept parts (9a, 9b) are almost entirely housed in the grooves (3) of the hollow nipple (1a).

2. Device for crimping or coupling end elements of a flexible pipe (5) according to claim 1, **characterized in that** the profile of the grooves (3) of the hollow nipple (1a) is of trapezoidal shape open on the face that receives the crept parts (9a, 9b) of the sealing sheath (9).

3. Device for crimping or coupling end elements of a flexible pipe (5) according to claims 1 or 2, **characterized in that** the free edges of the grooves (3) of the hollow nipple (1a) are rounded.

4. Device for crimping or coupling end elements of a flexible pipe (5) according to one of the preceding claims, **characterized in that** the depth (p) of the grooves (3) of the hollow nipple (1a) is at least equal to the height (h) of the crept part (9a, 9b) of the sealing sheath (9).

5. Device for crimping or coupling end elements of a flexible pipe (5) according to one of the preceding claims, **characterized in that** the angular aperture (b) of the profile of the grooves (3) of the hollow nipple (1a) is between 60 and 120° and preferably about 90°.

6. Device for crimping or coupling end elements of a flexible pipe (5) according to one of the preceding claims, **characterized in that** the vertex angle (a) of the tapered end (2) of the hollow nipple (1a) is between 5 and 30°.

7. Method for fitting a device for crimping or coupling end elements of a flexible pipe (5) according to claim 1, **characterized in that** it consists in heating the sealing sheath (9) so as to soften at least the crept parts (9a, 9b) and in introducing the hollow nipple (1a) once the sheath (9) has been heated.

8. Method for fitting a device for crimping or coupling end elements of a flexible pipe (5) according to claim 7, **characterized in that** the device (12) for heating the sheath (9) consists of a chamber containing a certain volume (13) surrounding part of the sheath (9) at least in the region of the introduction zone (14), hot air being introduced into said volume (13) to heat said part of the sheath (9).
